(19) **Europäisches Patentamt / European Patent Office / Office européen des brevets**

(11) **EP 2 089 623 B1**

(12) **FASCICULE DE BREVET EUROPEEN**

(45) Date de publication et mention
de la délivrance du brevet:
**04.01.2017 Bulletin 2017/01**

(21) Numéro de dépôt: **07866543.7**

(22) Date de dépôt: **26.11.2007**

(51) Int Cl.:
**F02D 41/02** (2006.01)  **F02D 41/24** (2006.01)

(86) Numéro de dépôt international:
**PCT/FR2007/052399**

(87) Numéro de publication internationale:
**WO 2008/071890 (19.06.2008 Gazette 2008/25)**

(54) **PROCEDE ET SYSTEME DE REGULATION DES PARAMETRES DE FONCTIONNEMENT D'UN MOTEUR THERMIQUE A INJECTION REDUISANT LES EMISSIONS POLLUANTES**

VERFAHREN UND SYSTEM ZUR ANPASSUNG DER BETRIEBSPARAMETER EINES WÄRMEINJEKTIONSMOTORS BEI GLEICHZEITIGER REDUZIERUNG VON ABGASEN

METHOD AND SYSTEM FOR ADJUSTING THE OPERATION PARAMETERS OF AN INJECTION THERMAL ENGINE WHILE REDUCING EFFLUENTS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **08.12.2006 FR 0655396**

(43) Date de publication de la demande:
**19.08.2009 Bulletin 2009/34**

(73) Titulaire: **Peugeot Citroën Automobiles SA**
**78140 Vélizy-Villacoublay (FR)**

(72) Inventeur: **GOURVES, Frédéric**
**95800 Courdimanche (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
**EP-A- 0 896 149    US-B1- 6 173 698**

EP 2 089 623 B1

**Description**

La présente invention concerne un procédé et un système de régulation du fonctionnement d'un moteur à combustion interne permettant d'en réduire les émissions polluantes.

Dans le but d'une réduction générale des émissions polluantes, il faut réduire les émissions de manière directe, c'est-à-dire les émissions à la source, en sortie du cylindre, et de manière indirecte, en optimisant le fonctionnement d'un dispositif catalyseur situé sur le parcours des gaz d'échappement.

En effet, un tel dispositif, couramment appelé catalyseur ou pot catalytique, ne fonctionne qu'au dessus d'une certaine température, couramment plus de 400°C. On rappelle ici que le catalyseur est un dispositif de réduction des émissions polluantes utilisant le principe de la catalyse pour transformer le monoxyde de carbone (CO), les hydrocarbures imbrûlés et les oxydes d'azote (NOx) en eau, azote et dioxyde de carbone.

Ainsi, tant que le catalyseur n'est pas amorcé du fait qu'il n'a pas atteint sa température de fonctionnement optimal, les émissions polluantes restent élevées. Il est estimé qu'actuellement, sur un cycle normalisé, un véhicule émet jusqu'à 90% du total des émissions polluantes pendant les premières dizaines de secondes de fonctionnement du moteur.

L'invention poursuit donc un double objectif : réduire les émissions polluantes brutes, c'est-à-dire en sortie de cylindre, et accélérer la chauffe catalyseur afin de minimiser le temps pendant lequel celui-ci est inactif.

Le but de l'invention est donc de réduire au maximum les émissions brutes tout en ayant une puissance thermique à l'échappement la plus élevée possible afin d'amorcer le catalyseur très rapidement.

Les moteurs à combustion interne à injection présentent de nombreux paramètres de fonctionnement ayant une influence sur les émissions polluantes à la source d'une part, et d'autre part, sur l'énergie thermique à l'échappement. Ces paramètres sont par exemple:

- la richesse moteur, qui traduit la proportion du mélange air/carburant injecté dans le moteur. On la définit comme le rapport entre les quantités d'air et de carburant du mélange injecté dans chaque cylindre. La richesse est une valeur généralement comprise entre 0.8 et 1.2, la valeur 1 correspondant au mélange stoechiométrique pour lequel la quantité d'oxygène contenue dans le mélange air/carburant est exactement égale à celle nécessaire à l'oxydation complète du carburant
- l'avance à l'allumage, qui permet d'influer sur l'énergie thermique à l'échappement. L'avance à l'allumage est définie par la distance, mesurée au vilebrequin et exprimée en degrés d'angle, entre l'allumage déclenché par la bougie et le point mort haut (PMH).
- le croisement de distribution, qui correspond à la période pendant laquelle les soupapes d'admission et d'échappement sont ouvertes en même temps.

Actuellement, les calculateurs qui équipent les moteurs de grande série intègrent la plupart de ces paramètres, dont les valeurs sont définies de manière à obtenir le meilleur compromis entre robustesse du moteur et niveau d'émissions polluantes. Cependant, il s'agit pour la plupart de réglages figés au moyen d'une cartographie.

Ces paramètres ont des influences différentes sur le fonctionnement du moteur, notamment sur le rendement, et sur la stabilité. En particulier, le fait d'agir sur l'un ou l'autre de ces paramètres peut dégrader fortement la stabilité moteur, ce qui est nuisible à la fois au confort de l'automobiliste et au bon fonctionnement et à la durée de vie du moteur. Pour un fonctionnement optimal du moteur, la stabilité de celui-ci doit donc être prise en compte par le système de gestion selon l'invention.

La présente invention propose donc un système de gestion des paramètres de fonctionnement d'un moteur thermique à injection, permettant à la fois de réduire les émissions polluantes brutes et d'optimiser la chauffe du dispositif catalyseur, les corrections effectuées étant déterminées en fonction de la stabilité réelle du moteur.

Ainsi, l'invention concerne un procédé de régulation des paramètres de fonctionnement d'un moteur à combustion interne à injection, comprenant les étapes suivantes:

- élaboration d'une consigne de stabilité,
- calcul d'un indice de stabilité moteur,
- calcul de l'écart de stabilité égal à la différence entre la consigne de stabilité et l'indice de stabilité,
- traitement de l'écart de stabilité par un régulateur qui fournit la correction à appliquer sur un des paramètres de fonctionnement du moteur, ce paramètre étant choisi par un calculateur contrôlant la régulation de manière que l'action corrective appliquée optimise le niveau d'émission de polluants et/ou l'énergie thermique disponible à l'échappement.

Ainsi, grâce à l'invention, l'ensemble des paramètres de fonctionnement du moteur, et en particulier ceux décrits plus hauts, peuvent être déterminés en prenant en compte le comportement réel du moteur. Cela permet d'agir sur tous les paramètres disponibles pour diminuer le niveau d'émissions polluantes à la source et pour réduire le temps de chauffe du catalyseur grâce à l'optimisation de l'énergie thermique disponible à l'échappement. La condition de stabilité garantit le bon fonctionnement du moteur en tenant compte des disparités de fabrication des moteurs, des différentes qualités de carburant, de l'usure du moteur, etc.

Dans une réalisation, chaque paramètre varie dans un intervalle défini par deux valeurs seuils.

Dans une réalisation, lorsqu'un paramètre atteint une valeur seuil sous l'effet d'une première action corrective, le calculateur contrôlant la régulation choisit alors un autre paramètre pour lequel va être déterminé de manière similaire une consigne à appliquer.

Dans une réalisation, le calculateur contrôlant la régulation choisit l'un après l'autre l'ensemble des paramètres de fonctionnement du moteur sur lesquels une action corrective peut être effectuée, l'ordre du choix des paramètres étant déterminé par l'influence de chacun de ces paramètres sur les émissions polluantes et/ou l'énergie thermique disponible à l'échappement.

Dans une réalisation, le régulateur est un régulateur de type PID.

Dans une réalisation, le superviseur peut, pour chaque paramètre considéré, mettre en oeuvre stratégie de secours en cas de non respect de la consigne de stabilité.

Dans une réalisation, le paramètre considéré est choisi dans le groupe comprenant: la richesse moteur, l'avance à l'allumage, le croisement de la distribution.

L'invention concerne également un système de commande d'un moteur à combustion interne à injection, mettant en oeuvre le procédé défini ci-dessus.

L'invention sera mieux comprise grâce à la description détaillée d'un exemple de réalisation, faite en référence aux figures parmi lesquelles:

- la figure 1 est un schéma-bloc général du procédé selon l'invention,
- la figure 2 représente un mode de réalisation particulier de l'invention,
- la figure 3 représente un exemple de stratégie de régulation mise en oeuvre par le système selon l'invention,
- les figures 4 et 5 représentent chacune un module de calcul du régulateur de la figure 2.

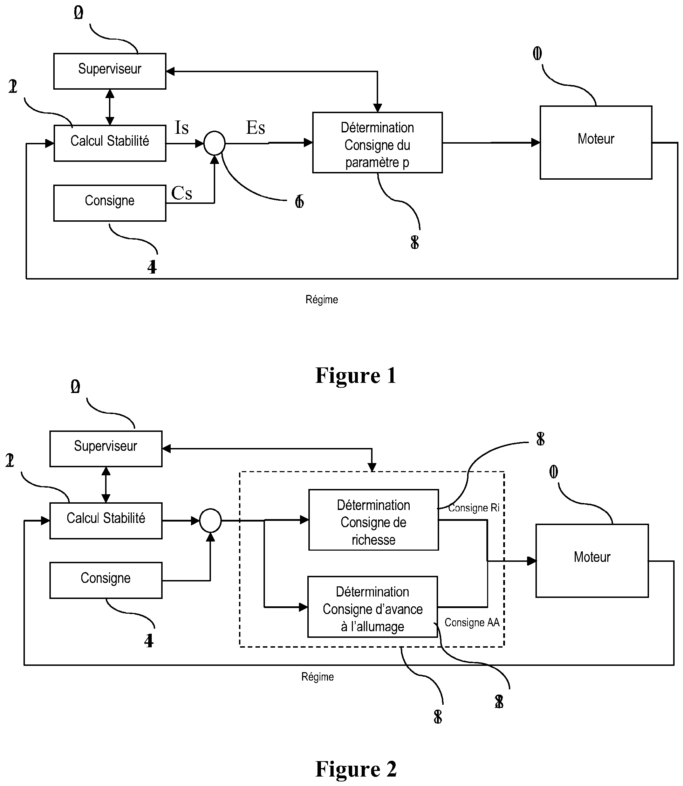

La figure 1 décrit, à l'aide de schémas blocs, la mise en oeuvre du procédé selon l'invention. La stabilité du moteur 10 est déterminée par une fonction 12 qui fournit comme résultat un indicateur de stabilité Is. Un calculateur 14 fournit une consigne de stabilité Cs, notamment par le biais d'une cartographie propre au moteur. Un comparateur 16, calcule la différence entre les deux valeurs Cs et Is, pour fournir en sortie un signal Es, appelé écart ou erreur de stabilité.

L'écart de stabilité Es est ensuite fourni à un régulateur 18, dans l'exemple un régulateur de type P.I.D. (proportionnel intégral dérivé), mais celui-ci peut être de tout autre type (LQ, Hinfini, etc.) Un calculateur 20, appelé superviseur, indique au régulateur 18 le paramètre p de fonctionnement moteur pour lequel une action corrective doit être effectuée. Le régulateur prend alors en compte l'écart de stabilité pour calculer une consigne Cp du paramètre p. Cette consigne est transmise à l'organe de commande du moteur pour être appliquée.

La stabilité du moteur est déterminée par plusieurs indicateurs qui estiment la qualité de la combustion :

- 1er cas: il est fait un calcul du couple moyen indiqué CMI

$$CMI = J_{mot} \times \frac{d\omega_{mot}}{dt} + CMF(carto)$$

défini par la formule suivante:

Avec :

- Jmot: inertie du moteur (kg.m$^2$)
- $\omega$mot: régime moteur (rad.s$^{-1}$)
- CMF: couple de frottement du moteur déterminé par le contrôle moteur en fonction du régime, des températures d'eau, d'huile et de la pression.

A partir de ce calcul il peut être fait plusieurs tests afin de vérifier que la combustion est correcte, on vérifie par exemple que:

- la dérivée de la CMI est supérieure à un seuil
- la consigne de CMI demandée par le contrôle moteur est respectée

- 2$^e$ cas: Une valeur Ind_stab est déterminée par la formule suivante:

$$Ind\_stab = \frac{PeriodeMoteur_n - PeriodeMoteur_{n-1}}{PeriodeMoteur_n}$$

Ce calcul peut être avantageusement moyenné sur plusieurs points afin de réaliser un filtrage passe-bas.

Ces différents tests permettent de définir l'indicateur de stabilité Is qui sera utilisé par le régulateur agissant sur la consigne d'avance, la consigne de richesse et la valeur de croisement de la distribution...

On a vu que le superviseur 20 est l'élément qui détermine le paramètre sur lequel on va engager une action corrective. Ce paramètre est choisi en fonction de son influence sur la diminution des émissions polluantes brutes et sur l'énergie thermique disponible à l'échappement. Or, tous les paramètres susceptibles d'être choisis n'ont pas la même influence, ce qui va constituer un premier critère de choix. Le superviseur a donc pour rôle de choisir dans une liste les paramètres par ordre d'influence, du plus influent au moins influent, puis, lorsque l'action corrective n'est pas possible ( par exemple parce qu'elle est déjà au maximum), de choisir le paramètre suivant dans la liste. L'ordre des paramètres dans cette liste sera différent selon que l'on veut privilégier la diminution des émissions brutes, l'augmentation de la puissance thermique disponible à l'échappement, ou encore un compromis entre les deux.

La figure 2 décrit un mode de réalisation du système décrit à la figure 1, dans lequel le régulateur peut effectuer un régulation des paramètres suivant: niveau de richesse, dégradation de l'avance à l'allumage, le croisement de la distribution étant dans l'exemple déterminé par cartographie en fonction de la valeur d'avance à l'allumage. Dans la figure 2, on retrouve les mêmes éléments que dans la figure 1. Toutefois, on voit que le régulateur 18 comprend plusieurs modules 181, 182, chacun de ces modules étant affectés au calcul de la consigne d'un des deux paramètres régulés. Dans l'exemple, le régulateur 18 comprend deux modules de calcul, mais, dans l'invention, le régulateur 18 comprend autant de modules de calcul que de paramètres devant être régulées.

Le superviseur doit déterminer sur quel paramètre agir en fonction du niveau de stabilité, mais également de l'historique de stabilité. Le superviseur donne l'ordre d'agir sur les différents paramètres de manière séquentielle: on commence par agir sur le paramètre dont la correction aura l'impact le plus important sur le niveau d'émissions polluantes brutes et/ou sur l'énergie thermique disponible à l'échappement.

Les trois paramètres utilisés dans l'exemple ont des influences différentes, que l'on peut évaluer de la manière suivante:

- niveau de richesse Ri: si la richesse est supérieure à 1, on influe principalement sur l'émission d'hydrocarbures imbrûlés (HC). Si la richesse est inférieure à 1, celle-ci influe sur les émissions d'oxydes d'azote (NOx). Le compromis réside donc dans une valeur proche de 1, avec toutefois l'inconvénient qu'une valeur supérieure à 1 est en défaveur de la puissance thermique disponible à l'échappement.
- dégradation de l'avance à l'allumage: ce paramètre a une influence prépondérante sur l'énergie thermique disponible à l'échappement, mais, en revanche, a peu d'impact sur les émissions à la source.
- croisement de la distribution: ce paramètre influe sur la stabilité de la combustion, et également, dans une moindre mesure, sur les émissions polluantes à la source.

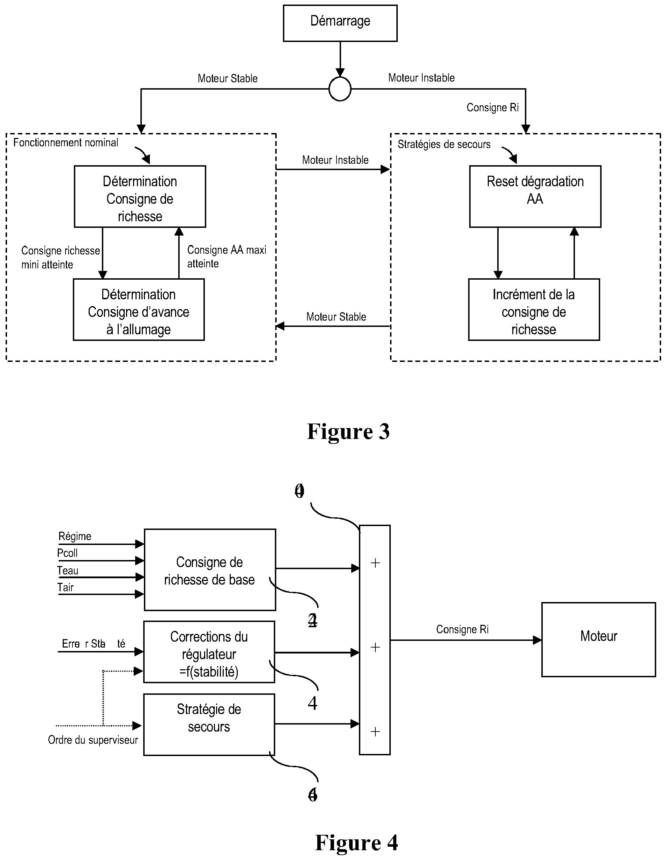

La figure 3 montre un exemple de déroulement de la stratégie de contrôle du moteur mise en oeuvre grâce au système selon l'invention.

On se place dans le cas où le moteur est stable immédiatement après le démarrage. Le superviseur 20 demande donc au module de régulation 181, affecté au calcul de la consigne de richesse, de déterminer un niveau de richesse mieux adapté, c'est-à-dire plus faible, ce qui permettra de diminuer les émissions d'hydrocarbures imbrûlés HC et d'optimiser la chauffe du catalyseur pour accélérer sa mise en fonctionnement.

Tant que le moteur reste stable (par rapport à la consigne de stabilité), la régulation va diminuer la consigne de richesse jusqu'à atteindre une valeur limite, par exemple égale à 1. Lorsque la consigne de richesse est en butée, il n'est plus possible d'agir sur celle-ci et le superviseur va donner l'ordre au module 182 de déterminer l'avance à l'allumage la mieux adaptée, de façon à augmenter encore l'énergie disponible à l'échappement. Le croisement de distribution (via déphaseurs d'arbre à cames) est dans l'exemple déterminé simplement par cartographie en fonction de la valeur d'avance.

Si le moteur devient alors très instable, on peut imaginer que le système active des stratégies de secours, impliquant par exemple un « reset » de l'avance à l'allumage, et, si ce n'est pas suffisant, une augmentation importante de la consigne de richesse. Lorsque la mise en oeuvre des stratégies de secours a permis de retrouver un niveau de stabilité acceptable, le système applique de nouveau une régulation normale.

La figure 4 décrit la fonction de régulation de la consigne de richesse Cri mise en oeuvre dans le module 181. Ce module de calcul 181 intègre une fonction sommatrice 40. Celui-ci comporte également trois fonctions 42, 44 et 46, chargées de déterminer respectivement une consigne de richesse de base, une correction de richesse (fonction de l'écart de stabilité), ainsi qu'une consigne de secours. Ainsi une ou plusieurs de ces fonctions 42, 44 et 46 sont actives selon la stratégie déterminée par le superviseur 20. En fonction des ordres envoyés par le superviseur 20, la consigne de richesse Cri, en sortie de la fonction 40, peut être déterminée:

- par une simple boucle ouverte (cartographie en fonction de la température d'eau par exemple). Dans ce cas le sommateur 40 ne prend en compte que le signal de sortie de la fonction 42, c'est-à-dire la consigne de richesse de base
- par une boucle ouverte ajoutée à une régulation de type PID par exemple, qui détermine une correction en fonction de l'erreur de stabilité. La régulation est assurée par la fonction 44, qui peut être par exemple de type PID. Dans ce cas, le sommateur 40 prend en compte les signaux de sortie fournis par les deux fonctions 42 et 44 (consigne de richesse de base et correction de richesse).
- par une stratégie de secours (incrément important sur la boucle ouverte par exemple). Dans ce cas, le sommateur 40 prend en compte les signaux de sortie des fonctions 42 et 46 (consigne de richesse de base et consigne de secours).

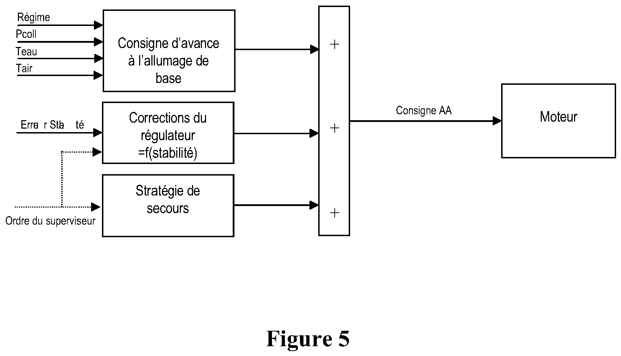

La figure 5 montre le fonctionnement du module 182, affecté au calcul d'une consigne d'avance à l'allumage. Son fonctionnement est identique, mutatis mutandis, à celui du module 181. L'invention est mise en oeuvre avec autant de modules de ce type que de paramètres devant être régulés.

## Revendications

1. Procédé de régulation des paramètres de fonctionnement d'un moteur (10) à combustion interne à injection, comprenant les étapes suivantes:

   - élaboration d'une consigne de stabilité Cs,
   - calcul d'un indice de stabilité moteur Is,
   - calcul de l'écart de stabilité Es égal à la différence entre la consigne de stabilité Cs et l'indice de stabilité Is.
   - traitement de l'écart de stabilité Es par un régulateur (18) qui fournit une consigne à appliquer pour un des paramètres de fonctionnement du moteur, ce paramètre étant choisi par un calculateur (20), ou superviseur, contrôlant la régulation de manière que l'action corrective appliquée optimise le niveau d'émission de polluants et/ou l'énergie thermique disponible à l'échappement tout en respectant la consigne de stabilité Cs,

   le procédé étant tel que, chaque paramètre variant dans un intervalle défini par deux valeurs seuils, lorsqu'un paramètre atteint une valeur seuil sous l'effet d'une première action corrective, le calculateur (20) contrôlant la régulation choisit alors un autre paramètre pour lequel va être déterminé de manière similaire une consigne à appliquer

2. Procédé selon la revendication 1, dans lequel le calculateur (20) contrôlant la régulation choisit l'un après l'autre l'ensemble des paramètres de fonctionnement du moteur sur lesquels une action corrective peut être effectuée, l'ordre du choix des paramètres étant déterminé par l'influence de chacun de ces paramètres sur les émissions polluantes et/ou l'énergie thermique disponible à l'échappement.

3. Procédé selon la revendication 1 ou 2, dans lequel le régulateur (18) comprend un régulateur de type PID.

4. Procédé selon l'une des revendications 1 à 3, dans lequel le calculateur (20) peut, pour chaque paramètre considéré, mettre en oeuvre stratégie de secours en cas d'écart de stabilité trop important.

5. Procédé selon l'une des revendications 1 à 4, dans lequel le paramètre considéré est choisi dans le groupe comprenant: la richesse moteur, l'avance à l'allumage, le croisement de la distribution.

6. Système de commande d'un moteur à combustion interne à injection, mettant en oeuvre le procédé selon l'une des revendications 1 à 5.

**Patentansprüche**

1. Verfahren zur Reglung der Betriebsparameter einer Einspritzbrennkraftmaschine (10), das die folgenden Schritte umfasst:

   - Ausarbeitung eines Stabilitätssollwerts Cs,
   - Berechnung eines Maschinenstabilitätsindex Is,
   - Berechnung des Stabilitätsunterschieds Es gleich dem Unterschied zwischen dem Stabilitätssollwert Cs und dem Stabilitätsindex Is,
   - Verarbeitung des Stabilitätsunterschieds Es durch einen Regulierer (18), der einen Sollwert liefert, der für einen der Betriebsparameter des Motors anzuwenden ist, wobei dieser Parameter von einem Rechner (20) oder Supervisor ausgewählt wird, der die Regulierung derart steuert, dass die angewandte korrigierende Aktion den Schadstoffemissionspegel und/oder die Wärmeenergie die an dem Auslass verfügbar ist, optimiert, während gleichzeitig der Stabilitätssollwert Cs eingehalten wird,

   wobei das Verfahren derart ist, dass jeder Parameter in einem Bereich variiert, der von zwei Schwellenwerten definiert ist, wenn ein Parameter einen Schwellenwert unter der Einwirkung einer ersten korrigierenden Aktion erreicht, der Rechner (20), der die Regulierung steuert, einen anderen Parameter auswählt, für den auf ähnliche Art ein anzuwendender Sollwert bestimmt wird.

2. Verfahren nach Anspruch 1, wobei der Rechner (20), der die Regulierung steuert, nacheinander sämtliche Betriebsparameter der Brennkraftmaschine, auf welchen eine korrigierende Aktion ausgeführt werden kann, auswählt, wobei die Reihenfolge der Auswahl der Parameter von dem Einfluss jedes dieser Parameter auf die Schadstoffemissionen und/oder die Wärmeenergie, die an dem Auslass verfügbar ist, bestimmt wird.

3. Verfahren nach Anspruch 1 oder 2, wobei der Regulierer (18) einen Regulierer des Typs PID umfasst.

4. Verfahren nach einem der Ansprüche 1 bis 3, wobei der Rechner (20) für jeden betroffenen Parameter eine Notstrategie bei zu hohem Stabilitätsunterschied umsetzen kann.

5. Verfahren nach einem der Ansprüche 1 bis 4, wobei der betroffene Parameter aus der Gruppe ausgewählt wird, die Folgende umfasst: Reichhaltigkeit der Maschine, Zündvoreilwinkel, Kreuzen der Verteilung.

6. Steuersystem einer Brennkraftmaschine mit Einspritzung, die das Verfahren nach einem der Ansprüche 1 bis 5 umsetzt.


**Claims**

1. A method for adjusting operation parameters of an injection internal combustion engine (10), including the following steps:

   - setting a stability setpoint Cs,
   - calculating an engine stability index Is,
   - calculating the stability deviation Es equal to the difference between the stability setpoint Cs and the stability index Is,
   - processing the stability deviation Es using a regulator (18) that provides a setpoint to be applied for one of the operation parameters of the engine, said parameter being selected by a computer (20), or supervisor, that controls the adjustment so that the corrective action applied optimizes the level of emission of pollutants and/or the thermal energy available at the exhaust, while respecting the stability setpoint Cs,

   the method being such that, with each parameter varying within an interval defined by two threshold values, when a parameter reaches a threshold value under the effect of a first corrective action, the computer (20) that controls the adjustment then selects another parameter for which a setpoint to be applied will be determined in a similar manner.

2. The method according to Claim 1, in which the computer (20) that controls the adjustment selects one after the other all of the operation parameters of the engine on which a corrective action can be carried out, the order of the selection of the parameters being determined by the influence of each of these parameters on the pollutant emissions and/or the thermal energy available at the exhaust.

3. The method according to Claim 1 or 2, in which the regulator (18) includes a PID-type regulator.

4. The method according to one of Claims 1 to 3, in which the computer (20) can, for each parameter concerned, implement an emergency strategy in the case of too great a stability deviation.

5. The method according to one of Claims 1 to 4, in which the parameter concerned is selected from the group including: engine richness, spark advance, distribution overlap.

6. A system for controlling an injection internal combustion engine, implementing the method according to one of Claims 1 to 5.

**Figure 1**

**Figure 2**

```
                              ┌─────────────┐
                              │  Démarrage  │
                              └──────┬──────┘
                                     │
                                     ▼
        Moteur Stable             ( ○ )            Moteur Instable
     ┌──────────────────────────────┘ └──────────────────────────────┐
     │                                              Consigne Ri       │
     ▼                                                                ▼
┌ ─ ─ ─ ─ ─ ─ ─ ─ ─ ─ ─ ─ ─ ─ ─ ─ ┐         ┌ ─ ─ ─ ─ ─ ─ ─ ─ ─ ─ ─ ─ ─ ─ ─ ─ ┐
  Fonctionnement nominal                       Stratégies de secours
│                                 │         │                                 │
        ┌──────────────────┐                        ┌──────────────────┐
│       │  Détermination   │      │         │        │ Reset dégradation │      │
        │   Consigne de    │◄──────────────────────  │        AA        │
│       │    richesse      │      │ Moteur  │        └──────────────────┘      │
        └───┬──────────▲───┘        Instable              │         ▲
│           │          │         │         │              │         │          │
   Consigne richesse  Consigne AA maxi                     ▼         │
│  mini atteinte       atteinte  │         │        ┌──────────────────┐      │
        ┌──────────────────┐                        │  Incrément de la │
│       │  Détermination   │      │         │        │   consigne de    │      │
        │ Consigne d'avance │◄──────────────────────  │    richesse      │
│       │   à l'allumage   │      │ Moteur  │        └──────────────────┘      │
        └──────────────────┘        Stable
└ ─ ─ ─ ─ ─ ─ ─ ─ ─ ─ ─ ─ ─ ─ ─ ─ ┘         └ ─ ─ ─ ─ ─ ─ ─ ─ ─ ─ ─ ─ ─ ─ ─ ─ ┘
```

## Figure 3

```
                                              0
                                              ╲
   Régime   ──►┌──────────────────┐          ┌───┐
   Pcoll    ──►│   Consigne de    │──────────►│ + │
   Teau     ──►│ richesse de base │          │   │
   Tair     ──►└──────────────────┘          │   │
                                  ╲  2        │   │
                                             │   │
Erreur Stabité ─►┌──────────────────┐        │   │      Consigne Ri     ┌──────────┐
                 │  Corrections du   │────────►│ + │────────────────────►│  Moteur  │
              ┊  │    régulateur    │         │   │                     └──────────┘
              ┊  │   =f(stabilité)  │         │   │
              ┊  └──────────────────┘ ╲  4    │   │
              ┊  ┌──────────────────┐         │   │
              ┊  │   Stratégie de   │         │   │
              └─►│     secours      │────────►│ + │
                 └──────────────────┘         └───┘
Ordre du superviseur              ╲
                                   6
```

## Figure 4

**Figure 5**